# EUROPÄISCHE PATENTSCHRIFT

(11) **EP 3 241 653 B1**
(45) Veröffentlichungstag und Bekanntmachung des Hinweises auf die Patenterteilung: **16.10.2019**
(21) Anmeldenummer: 17165414.8
(22) Anmeldetag: 20.04.2015
(51) Int. Cl.: B25F 3/00

(54) **WERKZEUGVORSATZ SOWIE WERKZEUGSYSTEM**
TOOL ATTACHMENT AND TOOL SYSTEM
ENSEMBLE D'OUTILS ET SYSTÈME D'OUTIL

(30) Priorität: 07.05.2014 DE 102014208495; 02.12.2014 DE 102014224591
(43) Veröffentlichungstag der Anmeldung: 08.11.2017
(62) Teilanmeldung aus: 15164225.3
(73) Patentinhaber: Robert Bosch GmbH, 70442 Stuttgart (DE)
(72) Erfinder: Necker, Andreas, 71111 Waldenbuch (DE); Braun, Marco, 3526 Miskolc (HU); Saur, Dietmar, 72116 Moessingen (DE)

(56) Entgegenhaltungen:
- EP-A1- 0 511 485
- EP-A1- 2 301 696
- EP-A2- 2 745 990
- WO-A1-92/20491
- DE-A1- 3 227 417
- FR-A1- 2 704 793

## Beschreibung

### Stand der Technik

Die vorliegende Erfindung betrifft einen Werkzeugvorsatz mit einem Vorsatzgehäuse, an dem eine Befestigungsschnittstelle zur lösbaren Befestigung an einer Handwerkzeugmaschine angeordnet ist, wobei der Werkzeugvorsatz mindestens eine erste Winkelpositionseinstelleinheit zur Einstellung einer vorgegebenen Winkelposition des Werkzeugvorsatzes an der Handwerkzeugmaschine aufweist und mit einer Verriegelungseinheit versehen ist, die in einem Verriegelungszustand den Werkzeugvorsatz zum Betrieb an der Handwerkzeugmaschine in der vorgegebenen Winkelposition verriegelt und im Entriegelungszustand ein Abziehen des Werkzeugvorsatzes von der Handwerkzeugmaschine ermöglicht.

Aus der FR 2 704 793 A1 ist ein Werkzeugvorsatz bekannt, der zur Befestigung an einer Handwerkzeugmaschine eine Befestigungsschnittstelle aufweist, die mit einer Winkelpositionseinstelleinheit und einer Verriegelungseinheit versehen ist. Die Winkelpositionseinstelleinheit dient zur Einstellung einer vorgegebenen Winkelposition des Werkzeugvorsatzes an der Handwerkzeugmaschine. Die Verriegelungseinheit hat die Aufgabe, in einem zugeordneten Entriegelungszustand ein Montieren oder Abziehen des Werkzeugvorsatzes an bzw. von der Handwerkzeugmaschine zu ermöglichen und in einem zugeordneten Verriegelungszustand den Werkzeugvorsatz zum Betrieb an der Handwerkzeugmaschine in der vorgegebenen Winkelposition zu verriegeln. In einem Zwischenzustand der Verriegelungseinheit ist weder das Ablösen des Werkzeugvorsatzes noch ein Betrieb der Handwerkzeugmaschine vorgesehen, aber durch eine Betätigung der Winkelpositionseinstelleinheit ist eine Anpassung der Winkelposition an eine veränderte Arbeitssituation möglich.

Nachteilig am Stand der Technik ist, dass die Handhabung eines derartigen Werkzeugvorsatzes umständlich und kompliziert ist und somit zu Komforteinbußen für einen Benutzer des Werkzeugvorsatzes führen kann.

Ein herkömmlicher Werkzeugvorsatz ist in EP 0 511 485 A1 offenbart.

### Offenbarung der Erfindung

Eine Aufgabe der Erfindung ist es daher, einen neuen Werkzeugvorsatz bereitzustellen, der in einer vorgegebenen Winkelposition an einer Handwerkzeugmaschine befestigbar ist und bei dem eine Änderung der vorgegebenen Winkelposition auf unkomplizierte, schnelle und für einen Benutzer komfortable Art und Weise erfolgen kann.

Dieses Problem wird gelöst durch einen
Werkzeugvorsatz mit einem Vorsatzgehäuse gemäß dem Anspruch 1.

Die erste Winkelpositionseinstelleinheit ist insbesondere dazu ausgebildet, eine Einstellung der vorgegebenen Winkelposition bei an der Handwerkzeugmaschine befestigter Befestigungsschnittstelle zu ermöglichen.

Die Befestigungsschnittstelle zur lösbaren und wechselbaren Befestigung des erfindungsgemäßen Werkzeugvorsatzes an der Handwerkzeugmaschine ist dazu ausgebildet, eine axiale Sicherung sowie eine Verdrehsicherung des Werkzeugvorsatzes an der Handwerkzeugmaschine zu ermöglichen. In einer Ausführungsform ist die Befestigungsschnittstelle derart ausgebildet, dass sie eine axiale Sicherung und Verdrehsicherung des Werkzeugvorsatzes an einem feststehenden Gehäusebauteil, zum Beispiel einem Bauteil des Getriebegehäuses, bewirkt. In einer alternativen Ausführungsform ist die Befestigungsschnittstelle derart ausgebildet, dass sie eine axiale Sicherung des Werkzeugvorsatzes an einer Abtriebswelle der Handwerkzeugmaschine bewirkt, während sie eine Verdrehsicherung an einem feststehenden Gehäusebauteil, zum Beispiel einem Bauteil des Getriebegehäuses, bewirkt. Die Befestigungsschnittstelle umfasst zumindest ein Sicherungselement zur axialen Sicherung des Werkzeugvorsatzes an der Handwerkzeugmaschine und zumindest ein Sicherungselement zur Verdrehsicherung des Werkzeugvorsatzes an der Handwerkzeugmaschine. Das zumindest eine Sicherungselement zur axialen Sicherung ist bevorzugt dazu ausgebildet, eine Axialsicherung des Werkzeugvorsatzes an einem feststehenden Gehäusebauteil zu bewirken. Alternativ kann das zumindest eine Sicherungselement zur axialen Sicherung dazu ausgebildet sein, eine Axialsicherung des Werkzeugvorsatzes an einer Abtriebswelle der Handwerkzeugmaschine zu bewirken. Das zumindest eine Sicherungselement zur axialen Sicherung ist insbesondere als Verriegelungseinheit zur Verriegelung des Werkzeugvorsatzes an der Handwerkzeugmaschine ausgebildet. Das zumindest eine Sicherungselement zur Verdrehsicherung des Werkzeugvorsatzes kann als Winkelpositionseinstelleinheit zur Einstellung einer vorgegebenen Winkelposition des Werkzeugvorsatzes an der Handwerkzeugmaschine ausgebildet sein.

Die erste Winkelpositionseinstelleinheit des erfindungsgemäßen Werkzeugvorsatzes hat den Vorteil, dass sie unabhängig von der Befestigungsschnittstelle des Werkzeugvorsatzes ausgebildet ist und zur Einstellung einer vorgegebenen Winkelposition unabhängig von der Befestigungsschnittstelle betätigbar ist. Die Befestigungsschnittstelle kann daher mit oder ohne Winkelpositionseinstelleinheit versehen sein.

Die Erfindung ermöglicht somit eine Winkelverstellung des Vorsatzgehäuses in Relation zur Handwerkzeugmaschine, die unabhängig von einer Winkelverstellung mittels der Befestigungsschnittstelle ist. Damit ist die Winkelverstellung unabhängig von einem Fehler, einer Beschädigung oder Verschmutzung der Befestigungsschnittstelle. Zugleich ergeben sich bei der Herstellung der Befestigungsschnittstelle vergleichsweise geringe Toleranzanforderungen und die Winkelverstellung kann losgelöst von der Handwerkzeugmaschine erfolgen.

Gemäß einer Ausführungsform weist die Befestigungsschnittstelle eine zweite Winkelpositionseinstelleinheit auf, die dazu ausgebildet ist, eine Einstellung der vorgegebenen Winkelposition beim Befestigen der Befestigungsschnittstelle an der Handwerkzeugmaschine zu ermöglichen. Die zweite Winkelpositionseinstelleinheit wird insbesondere durch Sicherungselemente zur Verdrehsicherung gebildet.

Durch die Verwendung einer ersten und einer zweiten Winkelpositionseinstelleinheit wird das Eindringen von Schmutzpartikeln in die Befestigungsschnittstelle und den Werkzeugvorsatz insgesamt erschwert.

Bevorzugt ist die erste Winkelpositionseinstelleinheit dazu ausgebildet, eine Änderung der mit der zweiten Winkelpositionseinstelleinheit beim Befestigen der Befestigungsschnittstelle an der Handwerkzeugmaschine eingestellten, vorgegebenen Winkelposition im Verriegelungszustand der Verriegelungseinheit zu ermöglichen.

Die Erfindung eröffnet somit für einen Benutzer eine weitere Möglichkeit zur Winkeleinstellung des Werkzeugvorsatzes.

Bevorzugt weist die zweite Winkelpositionseinstelleinheit ein der Befestigungsschnittstelle zugeordnetes Winkeleinstellelement auf, das starr mit dem Vorsatzgehäuse verbunden ist.

Bevorzugt weist die zweite Winkelpositionseinstelleinheit ein der Befestigungsschnittstelle zugeordnetes Winkeleinstellelement aufweist, das eine Winkeleinstellverzahnung aufweist.

Somit kann eine einfache und stabile Winkelpositionseinstelleinheit bereitgestellt werden. Das Winkeleinstellelement, z.B. eine Verzahnung, kann fest bzw. starr mit der Winkelpositionseinstelleinheit verbunden oder ein integraler Bestandteil dieser Winkelpositionseinstelleinheit sein.

Das Winkeleinstellelement ist bevorzugt zumindest abschnittsweise rohrförmig ausgebildet und weist eine Winkeleinstellverzahnung auf.

Die Erfindung ermöglicht somit die Bereitstellung eines Werkzeugvorsatzes mit einem robusten und kostengünstigen Verriegelungskörper.

Vorzugsweise weist die zweite Winkelpositionseinstelleinheit eine Zentrierhilfe zur axialen Zentrierung der Befestigungsschnittstelle an der Handwerkzeugmaschine auf.

Somit ist eine weitgehend selbsttätige Zentrierung des Werkzeugvorsatzes im Zuge eines Befestigungsvorgangs an der Handwerkzeugmaschine gegeben.

Bevorzugt ist die Zentrierhilfe zumindest abschnittsweise konusförmig ausgebildet.

Somit kann eine wirkungsvolle, weitgehende Zentrierung des Werkzeugvorsatzes an der Handwerkzeugmaschine erreicht werden.

Bevorzugt weist die erste Winkelpositionseinstelleinheit eine rohrförmige Zentrierhülse auf, die zumindest abschnittsweise koaxial von einem der Befestigungsschnittstelle zugeordneten Winkeleinstellelement unter Schaffung eines Zentrierbereichs umgeben ist, wobei zwischen der Zentrierhülse und dem Winkeleinstellelement in jeder einstellbaren Winkelposition ein kraftbeaufschlagter Formschluss ausgebildet ist.

Hierdurch ist eine von der zweiten Winkelpositionseinstelleinheit und damit von der Befestigungsschnittstelle unabhängige Winkelverstellung gegeben.

Gemäß einer Ausführungsform ist der Formschluss durch einen Eingriff einer der Zentrierhülse zugeordneten, ersten Winkeleinstellverzahnung in eine dem Winkeleinstellelement zugeordnete, zweite Winkeleinstellverzahnung ausbildbar.

Die Erfindung ermöglicht somit die zuverlässige Verdrehsicherung des Vorsatzgehäuses, wenn der Benutzer dieses nach dem Einstellen einer gewünschten Winkelposition freigibt.

Vorzugsweise ist die zweite Winkeleinstellverzahnung an einer umlaufenden, radial nach innen gerichteten Schulter des Winkeleinstellelements ausgebildet und weist von der Befestigungsschnittstelle weg.

Hierdurch ist eine besonders raumsparende Integration der zweiten Winkelpositionseinstelleinheit realisierbar.

Bevorzugt ist das Winkeleinstellelement mittels eines hülsenartigen Verbindungsglieds mit dem Vorsatzgehäuse verbunden.

Hierdurch ist eine mechanisch zuverlässige Verbindung zwischen der zweiten Winkelpositionseinstelleinheit und dem Vorsatzgehäuse gegeben.

Gemäß einer Ausführungsform ist eine Druckfeder zwischen einem radial nach innen gerichteten Flansch des Verbindungsglieds und einem an dem Winkeleinstellelement angeordneten Sicherungsring angeordnet.

Hierdurch kehrt die zweite Winkelpositionseinstelleinheit nach einer Freigabe des Vorsatzgehäuses durch einen Benutzer selbsttätig in ihre formschlüssige und daher verdrehgesicherte Eingriffsposition zurück. Darüber hinaus wird die Herstellung des Werkzeugvorsatzes erleichtert.

Die erste Winkelpositionseinstelleinheit umfasst insbesondere eine erste Winkeleinstellverzahnung und eine zweite Winkeleinstellverzahnung, wobei zwischen der ersten Winkeleinstellverzahnung und der zweiten Winkeleinstellverzahnung in jeder einstellbaren Winkelposition ein kraftbeaufschlagter Formschluss ausgebildet ist. Vorzugsweise ist die erste Winkeleinstellverzahnung an einer Zentrierhülse ausgebildet, welche der Antriebseinheit des Werkzeugvorsatzes zugeordnet ist. Bevorzugt ist die zweite Winkeleinstellverzahnung an einem Grundkörper des Werkzeugvorsatzes angeordnet. In einer besonderen Ausführungsform ist an dem Grundkörper die Winkeleinstellverzahnung der zweiten Winkelpositionseinstelleinheit angeordnet. In einer alternativen Ausführungsform, in der keine zweite Winkelpositionseinstelleinheit vorgesehen ist, weist der Grundkörper keine Winkeleinstellverzahnung auf.

Erfindungsgemäß ist die erste Winkelpositionseinstelleinheit durch eine kombinierte Längs- und Drehbewegung des Vorsatzgehäuses zur Änderung der vorgegebenen Winkelposition betätigbar.

Hierdurch ist eine für den Benutzer intuitiv handhabbare Winkelverstellungsfunktionalität des Werkzeugvorsatzes realisiert.

Gemäß einer Ausführungsform weist die Verriegelungseinheit einen zumindest abschnittsweise rohrförmig ausgebildeten Verriegelungskörper sowie einen an dem Verrieglungskörper angeordneten Betätigungsring auf, der zur Verriegelung des Verriegelungskörpers an der Handwerkzeugmaschine betätigbar ist.

Die Erfindung ermöglicht somit die Bereitstellung eines Werkzeugvorsatzes mit einem robusten und kostengünstigen Verriegelungskörper, der wie der Betätigungsring als kostengünstiges und robustes Bauteil ausgebildet werden kann.

Bevorzugt weist der Verriegelungskörper mindestens zwei Verriegelungselemente auf, die nach Art von Bajonetten zur Ausbildung einer Bajonett-Verbindung ausgebildet sind.

Hierdurch ist eine schnelle, stabile und zuverlässige Verriegelung des Werkzeugvorsatzes an einer zugeordneten Handwerkzeugmaschine möglich.

Das Eingangs genannte Problem wird ferner gelöst durch ein Werkzeugsystem mit einer Handwerkzeugmaschine und einem erfindungsgemäßen Werkzeugvorsatz.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine schematische Ansicht einer Handwerkzeugmaschine mit einer Werkzeugaufnahme und einer Befestigungsschnittstelle gemäß einer Ausführungsform,
- Fig. 2: eine perspektivische Schnittansicht durch einen ersten Werkzeugvorsatz mit einer ersten und einer zweiten Winkelpositionseinstelleinheit gemäß einer Ausführungsform, sowie mit einer Befestigungsschnittstelle zur Befestigung an der Handwerkzeugmaschine von Fig. 1,
- Fig. 3: eine perspektivische Ansicht der zweiten, im formschlüssigen Eingriff mit der ersten Winkelpositionseinstelleinheit stehenden Winkelpositionseinstelleinheit von Fig. 2,
- Fig. 4: eine perspektivische Ansicht der zweiten, im außer Eingriff stehenden Winkelpositionseinstelleinheit von Fig. 2,
- Fig. 5: eine perspektivische Schnittansicht eines zweiten Werkzeugvorsatzes zur Befestigung an der Handwerkzeugmaschine von Fig. 1,
- Fig. 6: eine perspektivische Ansicht des Werkzeugvorsatzes von Fig. 5, und
- Fig. 7: eine schematische Schnittansicht eines alternativen Werkzeugvorsatzes.

### Beschreibung der Ausführungsbeispiele

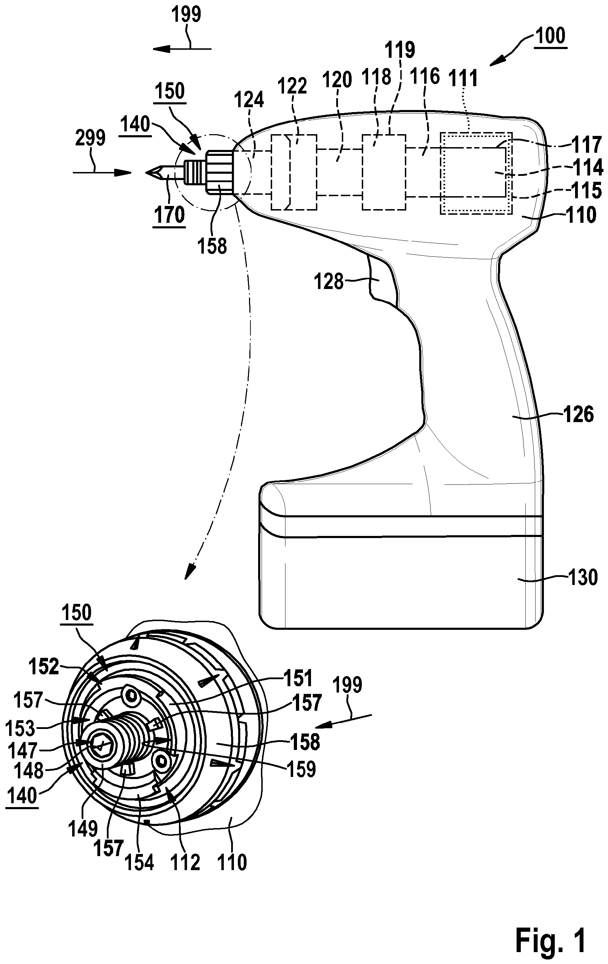

Fig. 1 zeigt eine mit einer Werkzeugaufnahme 140 und einer Befestigungsschnittstelle 150 versehene Handwerkzeugmaschine 100, die ein Gehäuse 110 mit einem Handgriff 126 aufweist. Gemäß einer Ausführungsform ist die Handwerkzeugmaschine 100 zur netzunabhängigen Stromversorgung mechanisch und elektrisch mit einem Akkupack 130 verbindbar. Die Handwerkzeugmaschine 100 ist hier beispielhaft als Akku-Schrauber ausgebildet. Es wird jedoch darauf hingewiesen, dass die vorliegende Erfindung nicht auf Akku-Schrauber beschränkt ist, sondern vielmehr bei unterschiedlichen Handwerkzeugmaschinen Anwendung finden kann, die eine der Befestigungsschnittstelle 150 entsprechende Befestigungsschnittstelle aufweisen, unabhängig davon, ob die Handwerkzeugmaschine elektrisch, d.h. netzunabhängig mit dem Akkupack 130, oder netzabhängig und/oder nicht-elektrisch betreibbar ist, z.B. bei Akku-Drehschlagschraubern.

In dem Gehäuse 110 sind ein von dem Akkupack 130 mit Strom versorgter, elektrischer Antriebsmotor 114, ein Getriebe 118 und eine optionale Drehmomenteinstellvorrichtung 122 angeordnet. Der Antriebsmotor 114 ist z.B. über einen Handschalter 128 betätigbar, d.h. ein- und ausschaltbar, und vorzugsweise derart elektronisch steuer- bzw. regelbar, dass sowohl ein Reversierbetrieb, als auch Vorgaben hinsichtlich einer gewünschten Drehgeschwindigkeit realisierbar sind.

Gemäß einer Ausführungsform ist der Antriebsmotor 114 ein elektronisch kommutierter Antriebsmotor, vorzugsweise ein Gleichstrommotor, der illustrativ Stator- und Rotorkomponenten 111 bzw. 117 aufweist. Hierbei bilden die Statorkomponenten 111 beispielhaft einen Außenstator aus und die Rotorkomponenten 117 beispielhaft einen Innenrotor. Es wird jedoch darauf hingewiesen, dass die Beschreibung eines nach Art eines elektronisch kommutierten Antriebsmotors mit Außenstator und Innenrotor ausgebildeten Antriebsmotors lediglich beispielhaften Charakter hat und nicht als Einschränkung der Erfindung zu verstehen ist, die auch bei einem Antriebsmotor mit Innenstator und Außenrotor oder z.B. bei einem bürstenbehafteten Kommutatormotor Anwendung finden kann.

Der Antriebsmotor 114 ist über eine zugeordnete Motorwelle 116 mit dem Getriebe 118 verbunden, das eine Drehung der Motorwelle 116 in eine Drehung eines zwischen Getriebe 118 und Drehmomenteinstellvorrichtung 122 vorgesehenen Antriebsglieds 120, z.B. einer Antriebswelle, umwandelt. Diese Umwandlung erfolgt bevorzugt derart, dass sich das Antriebsglied 120 relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

Bevorzugt ist die Werkzeugaufnahme 140 an einer Abtriebswelle 124 ausgebildet und hat illustrativ einen Aufnahmekörper 147 mit einer Innenmehrkant-Aufnahme 148, die zur Aufnahme von Einsatzwerkzeugen mit Außenmehrkant-Kupplungen vorgesehen ist. An dem Außenumfang des z.B. drehfest und/oder einstückig mit der Abtriebswelle 124 verbundenen Aufnahmekörpers 147 ist beispielhaft eine von einem Federelement in eine von der Handwerkzeugmaschine 100 wegweisende axiale Richtung 199 federbeaufschlagte Verriegelungshülse 149 zur Verriegelung geeigneter Einsatzwerkzeuge in der Innenmehrkant-Aufnahme 148 angeordnet.

Die Werkzeugaufnahme 140 ist beispielhaft nach Art eines Bithalters ausgebildet, d.h. zur Aufnahme eines nach Art eines Schrauberbits ausgebildeten Einsatzwerkzeugs 170, das in Richtung der Handwerkzeugmaschine 100, wie mit einem Pfeil 299 angedeutet, in die Innenmehrkant-Aufnahme 148 einschiebbar ist. Ein derartiger Schrauberbit, der z.B. vom sogenannten HEX-Typ ist, ist hinreichend aus dem Stand der Technik bekannt, sodass hier zwecks Knappheit der Beschreibung auf eine eingehende Beschreibung verzichtet wird. Es wird jedoch darauf hingewiesen, dass die vorliegende Erfindung nicht auf eine Verwendung von HEX-Schrauberbits beschränkt ist, sondern auch weitere Einsatzwerkzeuge in Abhängigkeit von einer jeweils gewählten Ausgestaltung der Werkzeugaufnahme 140, z.B. HEX-Bohrer oder sogenannte SDS-Quick-Einsatzwerkzeuge, Anwendung finden können. Darüber hinaus wird darauf hingewiesen, dass auch der Aufbau und die Funktionsweise eines geeigneten Bithalters dem Fachmann hinreichend bekannt sind, sodass hier zwecks Knappheit der Beschreibung auf eine eingehende Beschreibung des Bithalters 140 verzichtet werden kann.

Gemäß einer Ausführungsform ist der Handwerkzeugmaschine 100 die Befestigungsschnittstelle 150 zugeordnet, die illustrativ im Bereich des Bithalters 140 am Gehäuse 110 axial und radial unbeweglich befestigt ist und nachfolgend zwecks Klarheit der Beschreibung als die "Maschinenschnittstelle 150" bezeichnet wird. Bevorzugt ist die Maschinenschnittstelle 150 axial und radial unbeweglich im Bereich der Stirnseite 112 des Gehäuses 110 und/oder am Getriebegehäuse 119 befestigt. Es wird jedoch darauf hingewiesen, dass die Maschinenschnittstelle 150 lediglich beispielhaft als ein separates Bauteil ausgebildet ist und alternativ hierzu auch einstückig mit dem Gehäuse 110 und/oder dem Getriebegehäuse 119 ausgebildet sein kann.

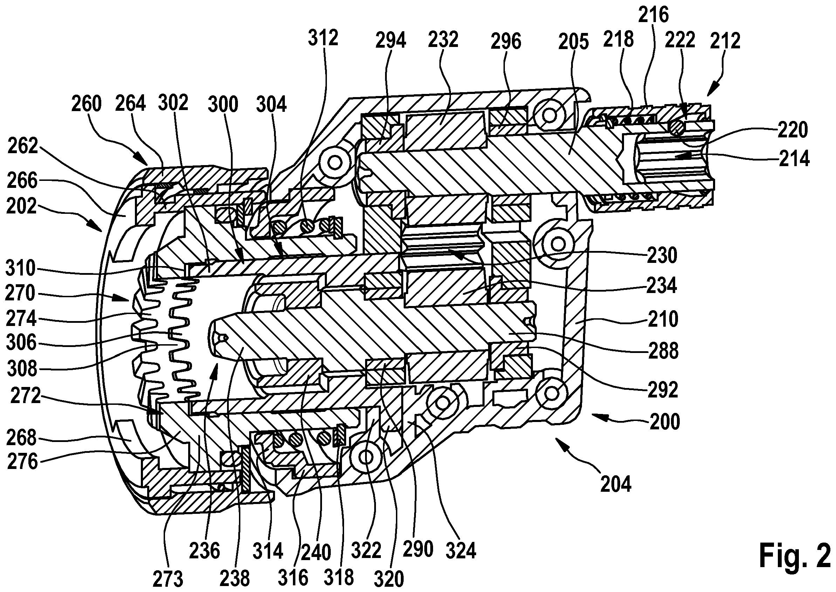

Die Maschinenschnittstelle 150 dient zur verdrehgesicherten Befestigung, insbesondere einer in einer vorgegebenen Winkelposition ausgerichteten Befestigung, eines bevorzugt austauschbaren Werkzeugvorsatzes (200 in Fig. 2) und weist illustrativ ein an einer Stirnseite 112 des Gehäuses 110 und/oder des Getriebegehäuses 119 verdrehgesichert befestigtes Befestigungselement 151 auf. Dieses ist beispielhaft zumindest abschnittsweise hülsen- bzw. ringförmig ausgebildet und im Bereich einer an der Stirnseite 112 am Gehäuse 110 ringförmig angeordneten Abschluss- bzw. Schutzhülse 158 mit geeigneten Befestigungsgliedern, z.B. Schrauben oder Nieten, befestigt, kann alternativ hierzu aber auch einstückig mit dem Gehäuse 110 und/oder dem Getriebegehäuse 119 ausgebildet sein. Das Befestigungselement 151 ummantelt den Bithalter 140 bevorzugt zumindest abschnittsweise mit einer vorgegebenen radialen Beabstandung, um eine axiale Verschiebung der Verriegelungshülse 149 des Bithalters 140 im Inneren des Befestigungselements 151 zu ermöglichen.

Das Befestigungselement 151 ist bevorzugt dazu ausgebildet, eine verdrehgesicherte axiale Zentrierung eines zugeordneten Werkzeugvorsatzes (200 in Fig. 2) an dem Gehäuse 110 zu ermöglichen. Illustrativ weist das Befestigungselement 151 an seinem Außenumfang mindestens zwei kreisringsegmentförmige Halteglieder 152, 154 auf, die nach Art von Bajonetten zur Ausbildung einer Bajonett-Verbindung ausgebildet sind. Es wird jedoch darauf hingewiesen, dass die Beschreibung einer derartigen Bajonett-Verbindung lediglich beispielhaften Charakter hat und nicht als Einschränkung der Erfindung dient. Vielmehr können auch alternative Befestigungsmöglichkeiten, wie z.B. eine sogenannte Drahtbügelverriegelung oder eine Kugelverriegelung Anwendung finden.

Darüber hinaus ist am Innenumfang des Befestigungselements 151 eine nach Art einer ringförmigen Kegelfläche 159 ausgebildete Zentrierhilfe 153 vorgesehen. Ferner weist das Befestigungselement 151 mindestens ein und beispielhaft drei Winkeleinstellglieder 157 auf. Es wird jedoch darauf hingewiesen, dass die beschriebene Ausgestaltung der Zentrierhilfe 153 und die angegebene Anzahl der Winkeleinstellglieder 157 lediglich beispielhaften Charakter hat und keine Einschränkung der Erfindung darstellt. Vielmehr sind andere Ausgestaltungen und Anzahlen möglich, z.B. kann die Zentrierhilfe 153 anstelle einer ringförmigen Kegelfläche 159 mehrere kegelförmige Bogenabschnitte aufweisen und anstelle der drei Winkeleinstellglieder 157 können sechs oder mehr Winkeleinstellglieder Anwendung finden, usw.

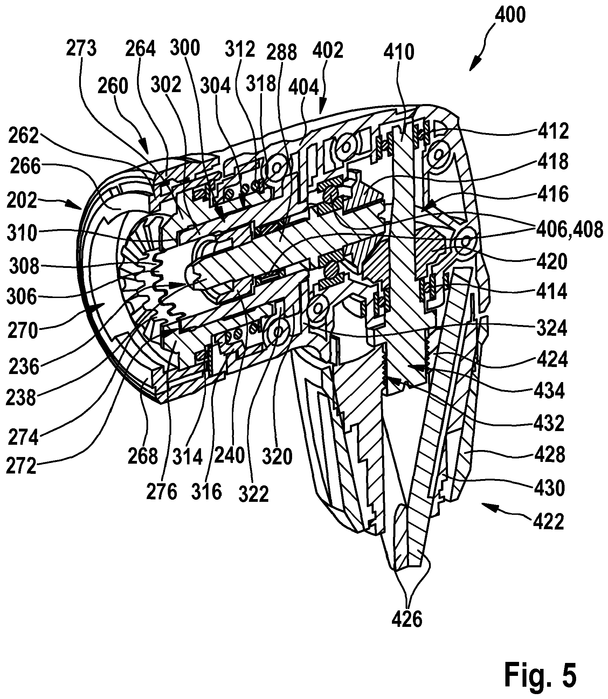

Fig. 2 zeigt einen beispielhaften Werkzeugvorsatz 200 zur Befestigung an der Handwerkzeugmaschine 100 von Fig. 1. Hierbei ist der Werkzeugvorsatz 200 bevorzugt lösbar an der Maschinenschnittstelle 150 der Handwerkzeugmaschine 100 von Fig. 1 befestigbar und somit austauschbar gegen andere Werkzeugvorsätze, z.B. den Werkzeugvorsatz 400 von Fig. 5.

Gemäß einer Ausführungsform ist der austauschbare Werkzeugvorsatz 200 nach Art eines Exzentervorsatzes ausgebildet und weist beispielhaft eine nachfolgend zwecks Klarheit der Beschreibung auch als "Vorsatzschnittstelle" bezeichnete Befestigungsschnittstelle 202 sowie eine nachfolgend auch als "Exzenterantriebsabschnitt" bezeichnete Antriebseinheit 204 auf. Es wird jedoch darauf hingewiesen, dass der Werkzeugvorsatz 200 nur beispielhaft als Exzentervorsatz ausgebildet ist und nicht zur Einschränkung der Erfindung. Vielmehr kann der austauschbare Werkzeugvorsatz 200 eine beliebige Ausgestaltung haben, z.B. nach Art eines Winkelvorsatzes, eines Bohrvorsatzes, als eine biegsame Welle usw. Mit derartigen, austauschbaren Werkzeugvorsätzen lässt sich mit nur einer Handwerkzeugmaschine ein komplexes Werkzeugsystem schaffen. Zur Vereinfachung der Beschreibung wird der austauschbare Werkzeugvorsatz 200 nachfolgend auch als "Exzentervorsatz 200" bezeichnet.

Der Exzenterantriebsabschnitt 204 weist beispielhaft ein Vorsatzgehäuse 210 auf, in dem eine drehend antreibbare Antriebswelle 288 in zwei Lagerelementen 290, 292 drehbeweglich gelagert ist. Die Antriebswelle 288 dient zum Antrieb einer parallel zu dieser versetzt angeordneten Abtriebswelle 205, die ebenfalls drehbeweglich im Vorsatzgehäuse 210 - z.B. in zwei Lagerelementen 294, 296 - gelagert ist und die beispielsweise zur rastenden Aufnahme des z.B. als Schrauberbit ausgestalteten Einsatzwerkzeugs 170 von Fig. 1 ausgebildet sein kann. An einem von der Vorsatzschnittstelle 202 weggerichteten axialen Ende 212 der Abtriebswelle 205 ist eine Mehrkant-Aufnahme 214 ausgebildet. Auf der Abtriebswelle 205 ist ferner eine Verriegelungshülse 216 angeordnet, die mittels einer Druckfeder 218 in Richtung des freien axialen Endes 212 der Abtriebswelle 205 beaufschlagt ist. Durch axiales Verschieben der Verriegelungshülse 216 entgegen der Kraftwirkung der Druckfeder 218 wird eine Verriegelungskugel 220 freigegeben, so dass diese sich in radialer Richtung nach außen bewegen kann und ein Einsatzwerkzeug in die Mehrkant-Aufnahme 214 eingeführt werden kann. Durch Freigeben der Verriegelungshülse 216 wird die Verriegelungskugel 220 durch eine geeignete Steuerkurve 222 in radialer Richtung soweit nach innen geführt, dass sie z.B. zumindest bereichsweise in eine korrespondierend ausgebildete Ausnehmung am Schaft des Einsatzwerkzeugs eingreift und hierdurch eine axiale Lagesicherung desselben bzw. das Herausfallen desselben aus der Mehrkant-Aufnahme 214 bewirkt.

Die Antriebswelle 288 treibt die Abtriebswelle 205 z.B. über eine geeignete Umsetzung 230 an, die hier exemplarisch mit einem Zahnradgetriebe mit zwei Stirnzahnrädern 232, 234 realisiert ist. Es wird jedoch darauf hingewiesen, dass eine geeignete Realisierung des Exzenterantriebsabschnitts 204 hinreichend aus dem Stand der Technik bekannt ist, sodass hier auf eine eingehende Beschreibung des Exzenterantriebabschnitts 204 zwecks Knappheit der Beschreibung verzichtet werden kann. An einem freien axialen Ende 236 der Antriebswelle 288 ist eine Mehrkant-Mitnahmekontur 238 ausgebildet, die von einem Betätigungsglied 240 zumindest abschnittsweise koaxial umschlossen ist.

Bei der Montage des Exzentervorsatzes 200 an der Maschinenschnittstelle 150 der Handwerkzeugmaschine 100 von Fig. 1 wird der Exzentervorsatz 200 in Richtung des Pfeils 299 von Fig. 1 an diese herangeführt. Hierbei verschiebt das Betätigungsglied 240 die Verriegelungshülse 149 der Handwerkzeugmaschine 100 und das freie Ende 236 der Antriebswelle 288 greift in deren Innenmehrkant-Aufnahme 148 ein.

Gemäß einer Ausführungsform weist die Vorsatzschnittstelle 202 eine Verriegelungseinheit 260 auf. Die Verriegelungseinheit 260 weist einen zumindest abschnittsweise rohrförmig ausgestalteten Verrieglungskörper 262 mit mindestens zwei nach Art von Bajonetten ausgebildeten Verriegelungselementen 266, 268 zur Schaffung einer Bajonett-Verbindung mit den beiden Haltegliedern 152, 154 der Maschinenschnittstelle 150 von Fig. 1 in einem Verriegelungszustand des Exzentervorsatzes 200 auf. Die bajonettartigen Verriegelungselemente 266, 268 sind dazu ausgebildet, den Exzentervorsatz 200 axial an der Handwerkzeugmaschine 100 zu verriegeln. Zum Wechsel zwischen diesem Verriegelungszustand - in dem der Exzentervorsatz 200 fest mit der Handwerkzeugmaschine 100 von Fig. 1 verbunden ist - und einem Entriegelungszustand des Exzentervorsatzes 200 - in dem sich dieser von der Handwerkzeugmaschine 100 abnehmen lässt - und umgekehrt, ist ein gleichfalls näherungsweise rohrförmiger Betätigungsring 264 vorgesehen, der zur Betätigung verdrehbar ist.

Die Vorsatzschnittstelle 202 weist bevorzugt eine Winkelpositionseinstelleinheit 270 auf, die durch formschlüssiges Zusammenwirken mit dem stirnseitigen Winkeleinstellglied 157 an der Maschinenschnittstelle 150 von Fig. 1 eine Einstellung einer beliebig vorgebbaren Winkelposition beim Befestigen des Exzentervorsatzes 200 an der Handwerkzeugmaschine 100 von Fig. 1, d.h. beim Übergang vom Entriegelungszustand in den Verriegelungszustand, ermöglicht. Zu diesem Zweck verfügt die vorzugsweise zumindest abschnittsweise rohrförmige Winkelpositionseinstelleinheit 270 über ein Winkeleinstellelement 272, das hier exemplarisch mit einer stirnseitigen, d.h. vom Exzenterantriebsabschnitt 204 abgewandten, Winkeleinstellverzahnung 274 realisiert ist und das starr mit dem Vorsatzgehäuse 210 verbunden ist oder alternativ integral zu diesem ausgebildet sein kann. Die zumindest abschnittsweise rohrförmige Winkelpositionseinstelleinheit 270 umfasst einen Grundkörper 273, an dem das Winkeleinstellelement 272 angeordnet ist. Das Winkeleinstellelement 272 mit der Winkeleinstellverzahnung 274 ist dazu ausgebildet, den Exzentervorsatz 200 verdrehsicher an der Handwerkzeugmaschine 100 zu befestigen.

Zwischen der Winkeleinstellverzahnung 274 und dem Winkeleinstellglied 157 der Maschinenschnittstelle 150 von Fig. 1 besteht im Verriegelungszustand in der jeweils gewählten Winkelposition ein zumindest bereichsweiser Formschluss. Um das Befestigen des Exzentervorsatzes 200 an der Maschinenschnittstelle 150 und insbesondere den Wechsel vom Entriegelungszustand in den Verriegelungszustand bzw. einen Austausch von verschiedenen Werkzeugvorsätzen weiter zu erleichtern, verfügt die Winkelpositionseinstelleinheit 270 über eine stirnseitige Zentrierhilfe 276, die hier lediglich exemplarisch zumindest abschnittsweise konisch ausgeführt ist. Zwischen dieser konusförmigen Zentrierhilfe 276 und der korrespondierend zu dieser, ebenfalls konusförmig ausgebildeten Zentrierhilfe 153 der Maschinenschnittstelle 150, besteht im Verriegelungszustand ein zumindest bereichsweiser Formschluss. Von der Konusform abweichende Geometrien, wie z.B. keilförmige oder ballige Konturen, sind gleichfalls möglich.

Gemäß einer Ausführungsform weist der Exzentervorsatz 200 eine weitere Winkelpositionseinstelleinheit 300 auf, die selbst im Verriegelungszustand und damit vollkommen unabhängig von der Winkelpositionseinstelleinheit 270 eine jederzeitige Änderung der mit dieser beim Befestigen des Exzentervorsatzes 200 an der Handwerkzeugmaschine 100 von Fig. 1 anfänglich festgelegten Winkelposition. Die Winkelpositionseinstelleinheit 300 ist bevorzugt mit einer im Wesentlichen rohrförmigen Zentrierhülse 302 aufgebaut, die zumindest abschnittsweise koaxial von dem Winkeleinstellelement 272 unter Schaffung eines Zentrierbereichs 304 umschlossen ist. Die Zentrierhülse 302 weist an ihrem stirnseitigen, d.h. vom Exzenterantriebsabschnitt 204 abgewandten axialen Ende eine erste Winkeleinstellverzahnung 306 auf, die bevorzugt in jeder einstellbaren Winkelposition mit einer zweiten Winkeleinstellverzahnung 308 in einem kraftbeaufschlagten Formschluss steht. Diese zweite Winkeleinstellverzahnung 308 ist an dem Grundkörper 273 ausgebildet. Die zweite Winkeleinstellverzahnung 308 ist illustrativ an einer radial nach innen weisenden, umlaufenden Schulter 310 des Grundkörper 273, hier des Winkeleinstellelements 272 ausgebildet, wobei die zweite Winkeleinstellverzahnung 308 dem Exzenterantriebsabschnitt 204 zugewandt ist, um das Ineinandergreifen mit der ersten Winkeleinstellverzahnung 306 zu ermöglichen. Die Zahnteilung der Winkeleinstellverzahnungen 306, 308 ist so gewählt, dass sich die Winkelposition in hinreichend feinen Stufen von z.B. 20° einstellen lässt. Die Kraftbeaufschlagung bzw. axiale mechanische Vorspannung der Zentrierhülse 302 erfolgt durch eine Druckfeder 312, deren eines Ende sich an einem Flansch 314 eines gleichfalls zumindest abschnittsweise hohlzylindrischen Verbindungsglieds 316 und deren anderes Ende sich an einem in einen äußeren Umfang des Winkeleinstellelements 272 eingelassenen Sicherungsring 318 abstützt. Die Zentrierhülse 302 verfügt an ihrem von der ersten Winkeleinstellverzahnung 306 weggerichteten Ende über einen abschnittsweise umlaufenden, radial nach außen gerichteten Flansch 320, der zwischen zwei radial nach innen gerichteten, abschnittsweise umlaufenden Vorsprüngen 322, 324 des Vorsatzgehäuses 210 eingespannt bzw. befestigt ist.

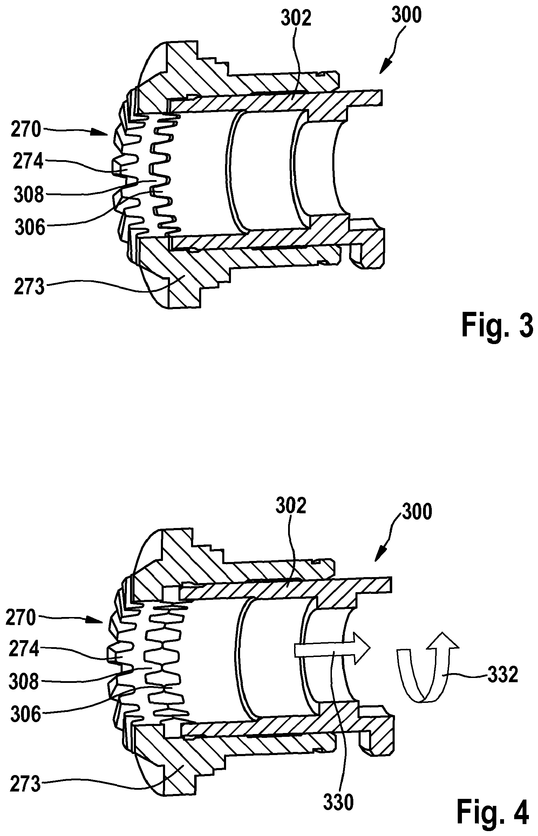

Fig. 3 und 4 - auf die im weiteren Fortgang zugleich Bezug genommen wird - zeigen die Winkelpositionseinstelleinheiten 270, 300 von Fig. 2 im Betrieb des austauschbaren Exzentervorsatzes 200 von Fig. 2. Hierbei besteht zunächst zwischen der rückwärtigen Winkeleinstellverzahnung 308 der Winkelpositionseinstelleinheit 270 und der Zentrierhülse 302 der Winkelpositionseinstelleinheit 300 ein kraftbeaufschlagter Formschluss. Erfindungsgemäß kann nun ausgehend von der in Fig. 3 gezeigten Stellung - und zwar unabhängig vom Zustand der Befestigungsschnittstellen 150, 202 der Handwerkzeugmaschine 100 und des Exzentervorsatzes 200 - eine beliebige Winkelposition des Exzentervorsatzes 200 von Fig. 2 in Relation zur Handwerkzeugmaschine 100 von Fig. 1 eingestellt werden, indem das Vorsatzgehäuse 210 und mit ihm die Zentrierhülse 302 in Richtung eines Pfeils 330 - entgegen der Kraftwirkung der Druckfeder 312 von Fig. 2 - in axialer Richtung bewegt werden und somit die Winkeleinstellverzahnungen 306, 308 außer Eingriff kommen.

In der in Fig. 4 gezeigten Stellung der Zentrierhülse 302 kann diese z.B. in Richtung eines Drehpfeils 332 in Bezug zur Winkelpositionseinstelleinheit 270 verdreht bzw. umgesetzt werden, bis eine wie erforderlich geänderte Winkelposition erreicht ist. Durch das Freigeben der mittels der Druckfeder kraftbeaufschlagen Zentrierhülse 302 kommen die Winkeleinstellverzahnungen 306, 308 in der vom Benutzer eingestellten Winkelposition dann wieder selbsttätig in Eingriff miteinander und der Umsetzvorgang ist beendet.

Somit kann der Benutzer durch eine intuitive, kombinierte Längs- und Drehbewegung, wie mit den Pfeilen 330, 332 angedeutet, die Winkelposition zwischen Exzentervorsatz und Handwerkzeugmaschine - unabhängig von der Möglichkeit diese beim Befestigen des Exzentervorsatzes anfänglich festzulegen -jederzeit verändern, um sie z.B. einer gegebenenfalls geänderten Arbeitssituation einfach und schnell anzupassen. Dies erfolgt durch eine kombinierte Längs- und Drehbewegung des Vorsatzgehäuses 210 bzw. der dem Vorsatzgehäuse 210 zugeordneten Antriebseinheit 204 relativ zu der Befestigungsschnittstelle 202.

Fig. 5 zeigt einen alternativen Werkzeugvorsatz 400, der z.B. gegen den Exzentervorsatz 200 von Fig. 2 austauschbar ist und ebenfalls an der Handwerkzeugmaschine 100 von Fig. 1 befestigbar ist. Der hier lediglich exemplarisch als ein austauchbarer bzw. auswechselbarer Winkelbohrfuttervorsatz ausgeführte Werkzeugvorsatz 400 weist beispielhaft die Vorsatzschnittstelle 202 von Fig. 2 auf, sowie eine nachfolgend auch als "Winkelantriebsabschnitt" bezeichnete Antriebseinheit 402.

Der Winkelantriebsabschnitt 402 weist beispielhaft ein Vorsatzgehäuse 404 auf, in dem die drehend antreibbare Antriebswelle 288 von Fig. 2 in zwei Lagerelementen 406, 408 drehbeweglich gelagert ist. Die Antriebswelle 288 dient zum Antrieb einer rechtwinklig bzw. orthogonal zu dieser angeordneten Abtriebswelle 410, die ebenfalls drehbeweglich im Vorsatzgehäuse 404 - z.B. in zwei Lagerelementen 412, 414, gelagert ist. Die Antriebswelle 288 treibt die Abtriebswelle 410 über eine (Winkel-)Umsetzung 416 an, die hier exemplarisch mit einem Zahnradgetriebe mit zwei Kegelzahnrädern 418, 420 realisiert ist. Es wird jedoch darauf hingewiesen, dass eine geeignete Realisierung des Winkelantriebsabschnitts 402 hinreichend aus dem Stand der Technik bekannt ist, sodass hier auf eine eingehende Beschreibung verzichtet werden kann.

Bevorzugt weist der Winkelantriebsabschnitt 402 eine Spannfuttereinheit 422 auf. Diese verfügt über einen Tragkörper 424, an dem eine Mehrzahl von Spannbacken 426 gelagert ist, die über einen mit einer Spannhülse 428 versehenen Spannkörper 430 zum radialen Einspannen eines Einsatzwerkzeugs, z.B. eines Rundbohrers, eines entsprechend ausgestalteten Schrauberbits oder dergleichen, betätigbar ist. Der Tragkörper 424 ist beispielsweise über eine Schraubverbindung 432 verdrehgesichert an einem axialen Endbereich 434 der Abtriebswelle 410 befestigt, so dass sich der Tragkörper 432 bei einer Drehbewegung der Abtriebswelle 410 mit dieser mit dreht.

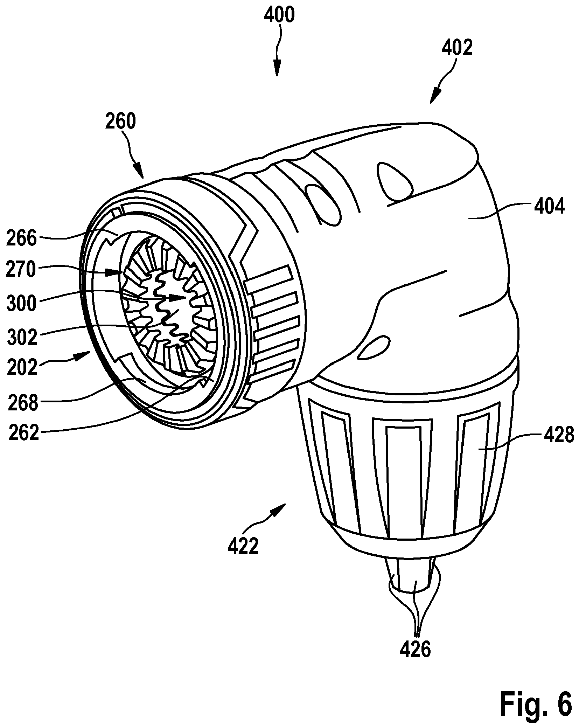

Fig. 6 zeigt den Winkelbohrfuttervorsatz 400 mit der Vorsatzschnittstelle 202 von Fig. 2 und dem Winkelantriebsabschnitt 402 von Fig. 4, mit der sich endseitig daran anschließenden Spannfuttereinheit 422. Die Vorsatzschnittstelle 202 umfasst, wie bei Fig. 2 beschrieben, die Verriegelungseinheit 260, welche den ringförmigen Verriegelungskörper 262 mit den daran nach Art von Bajonetten ausgebildeten und diametral zueinander angeordneten Verriegelungselementen 266, 268, sowie die Winkelpositionseinstelleinheiten 300, 270 mit der rohrförmigen Zentrierhülse 302 umfasst.

Die erste Winkelpositionseinstelleinheit 300 ist vorstehend in Kombination mit der Befestigungsschnittstelle 202 der Werkzeugvorsätze 200, 400 beschrieben. Die Befestigungsschnittstelle 150 der Handwerkzeugmaschine 100 und die Befestigungsschnittstelle 202 der Werkzeugvorsätze 200, 400 sind dazu ausgebildet, eine axiale Sicherung sowie eine Verdrehsicherung der Werkzeugvorsätze 200, 400 an einem feststehenden Gehäusebauteil, insbesondere dem Gehäuse 110 und/oder dem Getriebegehäuse 119, der Handwerkzeugmaschine 100 zu bewerkstelligen. Die kreisringsegmentförmigen Halteglieder 152, 154, die nach Art von Bajonetten ausgebildet sind, und die nach Art von Bajonetten ausgebildeten Verriegelungselemente 266, 268 bilden einander korrespondierende axiale Sicherungselemente zur axialen Sicherung der Werkzeugvorsätze 200, 400 an der Handwerkzeugmaschine 100. Die Winkeleinstellglieder 157 und die Winkeleinstellverzahnung 274 bilden einander korrespondierende Verdrehsicherungselemente zur Verdrehsicherung der Werkzeugvorsätze 200, 400 an der Handwerkzeugmaschine 100. Die Funktion der ersten Winkelpositionseinstelleinheit 300 ist jedoch nicht auf eine bestimmte Befestigungsschnittstelle an dem Werkzeugvorsatz und der Handwerkzeugmaschine beschränkt. Der Vorteil der ersten Winkelpositionseinstelleinheit 300 liegt gerade darin, dass sie getrennt von der Befestigungsschnittstelle ausgebildet ist und daher unabhängig von einer spezifisch ausgestalteten Befestigungsschnittstelle ausgebildet ist.

Alternative Ausführungsformen der Befestigungsschnittstelle sowie der Sicherungselemente zur axialen Sicherung und Sicherungselemente zur Verdrehsicherung sind möglich. Eine alternative Befestigungsschnittstelle mit den entsprechenden Sicherungselementen ist zum Beispiel beschrieben in DE 10 2011 084 495 A1, deren Offenbarung explizit in die vorliegende Beschreibung einbezogen wird, sodass hier zwecks Knappheit der Beschreibung auf eine eingehende Beschreibung hiervon verzichtet werden kann. Eine weitere alternative Befestigungsschnittstelle mit den entsprechenden Sicherungselementen ist zum Beispiel beschrieben in DE 10 2011 084 499 A1, deren Offenbarung ebenfalls explizit in die vorliegende Beschreibung einbezogen wird, sodass hier zwecks Knappheit der Beschreibung auf eine eingehende Beschreibung hiervon verzichtet werden kann.

Weitere alternative Sicherungselemente sind ebenfalls möglich. So kann zum Beispiel als axiales Sicherungselement auch ein Spannelement, zum Beispiel ein Spannhebel, am Werkzeugvorsatz dienen, welches mit einer am Gehäuse der Handwerkzeugmaschine umlaufenden Nut zusammenwirkt.

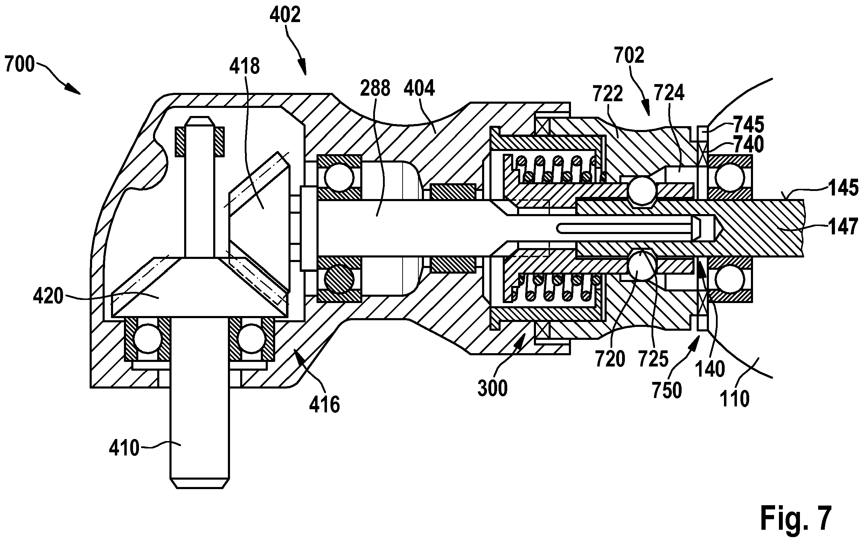

In einer weiteren alternativen Ausführungsform einer Verriegelung eines Werkzeugvorsatzes an einer Handwerkzeugmaschine sind Sicherungselemente zur Verdrehsicherung an einem feststehenden Gehäusebauteil wie dem Gehäuse und/oder dem Getriebegehäuse, ausgebildet. Die Verdrehsicherungselemente können zum Beispiel Verriegelungsvorsprünge sein, für die korrespondierende Verriegelungsaussparungen an dem Werkzeugvorsatz vorgesehen sind. Sicherungselemente zur axialen Sicherung hingegen sind an der Abtriebsspindel bzw. dem Bithalter der Handwerkzeugmaschine vorgesehen. Als Axialsicherungselement kann dabei eine an der Umfangsfläche des Bithalters umlaufende Nut vorhanden sein. Dementsprechend ist an dem Werkzeugvorsatz zumindest ein mit der Nut zusammenwirkender Verriegelungskörper, zum Beispiel eine Verriegelungskugel, angeordnet. Zwecks Verriegelung greift der Verriegelungskörper in die Nut an dem Bithalter ein. Ein derartiger alternativer Werkzeugvorsatz 700 ist in Fig. 7 schematisch in einer Schnittansicht dargestellt. Der Werkzeugvorsatz 700 ist exemplarisch als austauchbarer bzw. auswechselbarer Winkelbohrfuttervorsatz ausgeführt. Er weist die Winkelpositionseinstelleinheit 300 in Kombination mit einer zu der Befestigungsschnittstelle 202 alternativen Befestigungsschnittstelle 702 zur auswechselbaren Befestigung des Werkzeugvorsatzes 700 an einer korrespondierenden alternativen Befestigungsschnittstelle 750 der Handwerkzeugmaschine auf. Er weist ferner eine Antriebseinheit 402 gemäß Fig. 5 auf, welche nachfolgend auch als "Winkelantriebsabschnitt" bezeichnet wird. Der Winkelantriebsabschnitt 402 weist beispielhaft ein Vorsatzgehäuse 404 auf, in dem die drehend antreibbare Antriebswelle 288 drehbeweglich gelagert ist. Die Antriebswelle 288 dient zum Antrieb einer rechtwinklig bzw. orthogonal zu dieser angeordneten Abtriebswelle 410, die ebenfalls drehbeweglich im Vorsatzgehäuse 404 gelagert ist. Die Antriebswelle 288 treibt die Abtriebswelle 410 über eine (Winkel-)Umsetzung 416 an, die hier exemplarisch mit einem Zahnradgetriebe mit zwei Kegelzahnrädern 418, 420 realisiert ist. Bevorzugt weist der Winkelantriebsabschnitt 402 eine nicht dargestellte Spannfuttereinheit auf. Die Winkelpositionseinstelleinheit 300 ist, wie im Zusammenhang mit den Fig. 2 bis 6 beschrieben, ausgebildet.

Die Befestigungsschnittstelle 702 weist als axiale Sicherungselemente Verriegelungskörper 720 in Form von Verriegelungskugeln auf. Die Verriegelungskörper 720 greifen in ein an der Befestigungsschnittstelle 750 ausgebildetes korrespondierendes Sicherungselement in Form einer Verriegelungsausnehmung 725 ein. Die Verriegelungsausnehmung 725 nach Fig. 7 ist als umlaufende Verriegelungsnut ausgeführt. Anstelle einer umlaufenden Verriegelungsnut können auch mehrere einzelne Verriegelungsausnehmungen vorgesehen sein, die jeweils einen Verriegelungskörper 720 aufnehmen. Die Verriegelungsausnehmung 725 ist an der Werkzeugaufnahme 140 ausgebildet. Hierzu weist eine Außenfläche 145 des Aufnahmekörpers 147 die Verriegelungsausnehmung 725 auf. Zur austauschbaren Befestigung des Werkzeugvorsatzes 700 werden die Verriegelungskörper 720 mit einer radial nach innen wirkenden Kraft derart beaufschlagt, dass sie in der Verriegelungsausnehmung 725 gehalten werden. Die Kraftbeaufschlagung erfolgt durch einen an dem Vorsatzgehäuse 404 längsverschieblich gelagerten und federbelasteten Verriegelungsring 722, welcher als Bedienelement ausgebildet ist. Zum Lösen des Werkzeugvorsatzes 700 wird der Verriegelungsring 722 in axialer Richtung von dem Gehäuse 110 der Handwerkzeugmaschine weg bewegt, wodurch die Verriegelungskörper 720 radial nach außen in Aufnahmen 724 im Verriegelungsring 722 ausweichen.

Ferner weist die Befestigungsschnittstelle 702 Sicherungselemente zur Verdrehsicherung des Werkzeugvorsatzes 700 an der Befestigungsschnittstelle 750 der Handwerkzeugmaschine auf. Als Verdrehsicherungselemente sind Verriegelungsvorsprünge 740 vorgesehen, die in korrespondierende Verriegelungsaussparungen 745 an dem Gehäuse 110 der Handwerkzeugmaschine eingreifen. Hierfür sind die Verriegelungsvorsprünge 740 und die Verriegelungsaussparungen 745 jeweils in Form eines Zahnkranzes mit regelmäßig oder unregelmäßig angeordneten Verriegelungszähnen ausgebildet.

Die Funktion der ersten Winkelpositionseinstelleinheit 300 ist ferner nicht auf die Kombination mit der zweiten Winkelpositionseinstelleinheit 270 beschränkt. Der Vorteil der ersten Winkelpositionseinstelleinheit 300 liegt gerade darin, von der Befestigungsschnittstelle getrennt ausgebildet zu sein, so dass eine Winkelpositionseinstelleinheit an der Befestigungsschnittstelle entfallen kann.

## Patentansprüche

1. Werkzeugvorsatz (200) mit einem Vorsatzgehäuse (210), an dem eine Befestigungsschnittstelle (202) zur lösbaren Befestigung an einer Handwerkzeugmaschine (100) angeordnet ist, wobei die Befestigungsschnittstelle (202) mindestens mit einer Verriegelungseinheit (260) versehen ist, die in einem Verriegelungszustand den Werkzeugvorsatz (200) zum Betrieb an der Handwerkzeugmaschine (100) verriegelt und im Entriegelungszustand ein Abziehen des Werkzeugvorsatzes (200) von der Handwerkzeugmaschine (100) ermöglicht, und mit einer ersten Winkelpositionseinstelleinheit (300) zur Einstellung einer vorgegebenen Winkelposition des Werkzeugvorsatzes (200) an der Handwerkzeugmaschine (100), wobei die erste Winkelpositionseinstelleinheit (300) im Verriegelungszustand und im Entriegelungszustand der Verriegelungseinheit (260) betätigbar ist, um eine Änderung der vorgegebenen Winkelposition zu ermöglichen, **dadurch gekennzeichnet, dass** die erste Winkelpositionseinstelleinheit (300) durch eine kombinierte Längs- und Drehbewegung des Vorsatzgehäuses (210) relativ zu der Befestigungsschnittstelle (202) zur Änderung der vorgegebenen Winkelposition betätigbar ist.

2. Werkzeugvorsatz nach Anspruch 1, **dadurch gekennzeichnet, dass** die erste Winkelpositionseinstelleinheit (300) dazu ausgebildet ist, eine Einstellung der vorgegebenen Winkelposition bei an der Handwerkzeugmaschine (100) befestigter Befestigungsschnittstelle (202) zu ermöglichen.

3. Werkzeugvorsatz nach Anspruch 1 oder 2, **dadurch gekennzeichnet, dass** die Befestigungsschnittstelle (202) eine zweite Winkelpositionseinstelleinheit (270) aufweist, die dazu ausgebildet ist, eine Einstellung der vorgegebenen Winkelposition beim Befestigen der Befestigungsschnittstelle (202) an der Handwerkzeugmaschine (100) zu ermöglichen.

4. Werkzeugvorsatz nach Anspruch 3, **dadurch gekennzeichnet, dass** die erste Winkelpositionseinstelleinheit (300) dazu ausgebildet ist, eine Änderung der mit der zweiten Winkelpositionseinstelleinheit (270) beim Befestigen der Befestigungsschnittstelle (202) an der Handwerkzeugmaschine (100) eingestellten, vorgegebenen Winkelposition im Verriegelungszustand der Verriegelungseinheit (260) zu ermöglichen.

5. Werkzeugvorsatz nach Anspruch 3 oder 4, **dadurch gekennzeichnet, dass** die zweite Winkelpositionseinstelleinheit (270) ein der Befestigungsschnittstelle (202) zugeordnetes Winkeleinstellelement (272) aufweist, das starr mit dem Vorsatzgehäuse (210) verbunden ist.

6. Werkzeugvorsatz nach Anspruch 3 bis 5, **dadurch gekennzeichnet, dass** die zweite Winkelpositionseinstelleinheit (270) ein der Befestigungsschnittstelle (202) zugeordnetes Winkeleinstellelement (272) aufweist, das eine Winkeleinstellverzahnung (274) aufweist.

7. Werkzeugvorsatz nach einem der Ansprüche 3 bis 6, **dadurch gekennzeichnet, dass** die zweite Winkelpositionseinstelleinheit (270) eine Zentrierhilfe (276) zur axialen Zentrierung der Befestigungsschnittstelle (202) an der Handwerkzeugmaschine (100) aufweist.

8. Werkzeugvorsatz nach Anspruch 7, **dadurch gekennzeichnet, dass** die Zentrierhilfe (276) zumindest abschnittsweise konusförmig ausgebildet ist.

9. Werkzeugvorsatz nach einem der vorhergehenden Ansprüche, **dadurch gekennzeichnet, dass** die erste Winkelpositionseinstelleinheit (300) eine rohrförmige Zentrierhülse (302) aufweist, die zumindest abschnittsweise koaxial von einem der Befestigungsschnittstelle (202) zugeordneten Winkeleinstellelement (272) unter Schaffung eines Zentrierbereichs umgeben ist, wobei zwischen der Zentrierhülse (302) und dem Winkeleinstellelement (272) in jeder einstellbaren Winkelposition ein kraftbeaufschlagter Formschluss ausgebildet ist.

10. Werkzeugvorsatz nach Anspruch 9, **dadurch gekennzeichnet, dass** der Formschluss durch einen Eingriff einer der Zentrierhülse (302) zugeordneten, ersten Winkeleinstellverzahnung (306) in eine dem Winkeleinstellelement (272) zugeordnete, zweite Winkeleinstellverzahnung (308) ausbildbar ist.

11. Werkzeugvorsatz nach Anspruch 10, **dadurch gekennzeichnet, dass** die zweite Winkeleinstellverzahnung (308) an einer umlaufenden, radial nach innen gerichteten Schulter (310) des Winkeleinstellelements (272) ausgebildet ist und von der Befestigungsschnittstelle (202) weg weist.

12. Werkzeugvorsatz nach einem der Ansprüche 9 bis 11, **dadurch gekennzeichnet, dass** das Winkeleinstellelement (272) mittels eines hülsenartigen Verbindungsglieds (316) mit dem Vorsatzgehäuse (210) verbunden ist.

13. Werkzeugvorsatz nach Anspruch 12, **dadurch gekennzeichnet, dass** eine Druckfeder (312) zwischen einem radial nach innen gerichteten Flansch (314) des Verbindungsglieds (316) und einem an dem Winkeleinstellelement (272) angeordneten Sicherungsring (318) angeordnet ist.

14. Werkzeugvorsatz nach einem der vorhergehenden Ansprüche, **dadurch gekennzeichnet, dass** die erste Winkelpositionseinstelleinheit (300) eine erste Winkeleinstellverzahnung (306) und eine zweite Winkeleinstellverzahnung (308) umfasst, wobei zwischen der ersten Winkeleinstellverzahnung (306) und der zweiten Winkeleinstellverzahnung (308) in jeder einstellbaren Winkelposition ein kraftbeaufschlagter Formschluss ausgebildet ist.

15. Werkzeugvorsatz nach Anspruch 14, **dadurch gekennzeichnet, dass** die erste Winkeleinstellverzahnung (306) an einer Zentrierhülse (302) ausgebildet ist, welche der Antriebseinheit (204) zugeordnet ist.

16. Werkzeugvorsatz nach Anspruch 14 oder 15, **dadurch gekennzeichnet, dass** die zweite Winkeleinstellverzahnung (308) an einem Grundkörper (273) des Werkzeugvorsatzes (200) angeordnet ist.

17. Werkzeugvorsatz nach Anspruch 16, **dadurch gekennzeichnet, dass** an dem Grundkörper (273) die Winkeleinstellverzahnung (274) der zweiten Winkelpositionseinstelleinheit (270) angeordnet ist.

18. Werkzeugvorsatz nach einem der vorhergehenden Ansprüche, **dadurch gekennzeichnet, dass** die Verriegelungseinheit (260) einen zumindest abschnittsweise rohrförmig ausgebildeten Verriegelungskörper (262) sowie einen an dem Verrieglungskörper (262) angeordneten Betätigungsring (264) aufweist, der zur Verriegelung des Verriegelungskörpers (262) an der Handwerkzeugmaschine (100) betätigbar ist.

19. Werkzeugvorsatz nach Anspruch 18, **dadurch gekennzeichnet, dass** der Verriegelungskörper (262) mindestens zwei Verriegelungselemente (266, 268) aufweist, die nach Art von Bajonetten zur Ausbildung einer Bajonett-Verbindung ausgebildet sind.

20. Werkzeugsystem mit einer Handwerkzeugmaschine (100) und einem Werkzeugvorsatz (200, 400) nach einem der vorhergehenden Ansprüche.

## Claims

1. Tool attachment (200) having an attachment housing (210) on which a fastening interface (202) for releasably fastening to a portable power tool (100) is arranged, wherein the fastening interface (202) is provided at least with a locking unit (260) which, in a locking state, locks the tool attachment (200) to the portable power tool (100) for operation and, in the unlocking state, allows the tool attachment (200) to be removed from the portable power tool (100), and having a first angular position setting unit (300) for setting a predetermined angular position of the tool attachment (200) on the portable power tool (100), wherein the first angular position setting unit (300) is actuable in the locking state and in the unlocking state of the locking unit (260) in order to allow the predetermined angular position to be changed, **characterized in that** the first angular position setting unit (300) is actuable by a combined longitudinal and rotary movement of the attachment housing (210) relative to the fastening interface (202) in order to change the predetermined angular position.

2. Tool attachment according to Claim 1, **characterized in that** the first angular position setting unit (300) is configured to allow the predetermined angular position to be set with the fastening interface (202) fastened to the portable power tool (100).

3. Tool attachment according to Claim 1 or 2, **characterized in that** the fastening interface (202) has a second angular position setting unit (270), which is configured to allow the predetermined angular position to be set when the fastening interface (202) is fastened to the portable power tool (100).

4. Tool attachment according to Claim 3, **characterized in that** the first angular position setting unit (300) is configured to allow the predetermined angular position, set by the second angular position setting unit (270) when the fastening interface (202) is fastened to the portable power tool (100), to be changed in the locking state of the locking unit (260).

5. Tool attachment according to Claim 3 or 4, **characterized in that** the second angular position setting unit (270) has an angle setting element (272) assigned to the fastening interface (202), said angle setting element (272) being connected rigidly to the attachment housing (210).

6. Tool attachment according to Claims 3 to 5, **characterized in that** the second angular position setting unit (270) has an angle setting element (272) assigned to the fastening interface (202), said angle setting element (272) having an angle setting toothing (274).

7. Tool attachment according to one of Claims 3 to 6, **characterized in that** the second angular position setting unit (270) has a centring aid (276) for axially centring the fastening interface (202) on the portable power tool (100).

8. Tool attachment according to Claim 7, **characterized in that** the centring aid (276) is formed at least partially in a conical manner.

9. Tool attachment according to one of the preceding claims, **characterized in that** the first angular position setting unit (300) has a tubular centring sleeve (302) which is at least partially surrounded coaxially by an angle setting element (272) assigned to the fastening interface (202), with a centring region being created, wherein a force-loaded form fit is formed between the centring sleeve (302) and the angle setting element (272) in every settable angular position.

10. Tool attachment according to Claim 9, **characterized in that** the form fit is able to be formed by engagement of a first angle setting toothing (306), assigned to the centring sleeve (302), in a second angle setting toothing (308), assigned to the angle setting element (272).

11. Tool attachment according to Claim 10, **characterized in that** the second angle setting toothing (308) is formed on an encircling, radially inwardly directed shoulder (310) of the angle setting element (272) and faces away from the fastening interface (202).

12. Tool attachment according to one of Claims 9 to 11, **characterized in that** the angle setting element (272) is connected to the attachment housing (210) by means of a sleeve-like connecting member (316).

13. Tool attachment according to Claim 12, **characterized in that** a compression spring (312) is arranged between a radially inwardly directed flange (314) of the connecting member (316) and a securing ring (318) arranged on the angle setting element (272).

14. Tool attachment according to one of the preceding claims, **characterized in that** the first angular position setting unit (300) comprises a first angle setting toothing (306) and a second angle setting toothing (308), wherein a force-loaded form fit is formed between the first angle setting toothing (306) and the second angle setting toothing (308) in any settable angular position.

15. Tool attachment according to Claim 14, **characterized in that** the first angle setting toothing (306) is formed on a centring sleeve (302) which is assigned to the drive unit (204).

16. Tool attachment according to Claim 14 or 15, **characterized in that** the second angle setting toothing (308) is arranged on a main body (273) of the tool attachment (200).

17. Tool attachment according to Claim 16, **characterized in that** the angle setting toothing (274) of the second angular position setting unit (270) is arranged on the main body (273).

18. Tool attachment according to one of the preceding claims, **characterized in that** the locking unit (260) has a locking body (262) formed at least partially in a tubular manner and an actuating ring (264) arranged on the locking body (262), said actuating ring (264) being actuable in order to lock the locking body (262) to the portable power tool (100).

19. Tool attachment according to Claim 18, **characterized in that** the locking body (262) has at least two locking elements (266, 268) which are formed in the manner of bayonets in order to form a bayonet connection.

20. Tool system having a portable power tool (100) and a tool attachment (200, 400) according to one of the preceding claims.

## Revendications

1. Ensemble d'outil (200) avec un boîtier d'ensemble d'outil (210), sur lequel une interface de fixation (202) est disposée pour la fixation amovible à une machine-outil manuelle (100), dans lequel l'interface de fixation (202) est munie d'au moins une unité de verrouillage (260), qui dans un état de verrouillage verrouille l'ensemble d'outil (200) pour le fonctionnement à la machine-outil manuelle (100) et dans l'état de déverrouillage permet un enlèvement de l'ensemble d'outil (200) de la machine-outil manuelle (100), et avec une première unité de réglage de position angulaire (300) pour le réglage d'une position angulaire prédéterminée de l'ensemble d'outil (200) sur la machine-outil manuelle (100), la première unité de réglage de position angulaire (300) pouvant être actionnée dans l'état de verrouillage et dans l'état de déverrouillage de l'unité de verrouillage (260) pour permettre un changement de la position angulaire prédéterminée, **caractérisé en ce que** la première unité de réglage de position angulaire (300) peut être actionnée par un mouvement longitudinal et rotatif combiné du boîtier d'ensemble d'outil (210) par rapport à l'interface de fixation (202) pour le changement de la position angulaire prédéterminée.

2. Ensemble d'outil selon la revendication 1, **caractérisé en ce que** la première unité de réglage de position angulaire (300) est conçue de façon à permettre un réglage de la position angulaire prédéterminée lorsque l'interface de fixation (202) est fixée à la machine-outil manuelle (100).

3. Ensemble d'outil selon la revendication 1 ou 2, **caractérisé en ce que** l'interface de fixation (202) présente une deuxième unité de réglage de position angulaire (270), qui est conçue de façon à permettre un réglage de la position angulaire prédéterminée lors de la fixation de l'interface de fixation (202) à la machine-outil manuelle (100).

4. Ensemble d'outil selon la revendication 3, **caractérisé en ce que** la première unité de réglage de position angulaire (300) est conçue de façon à permettre, dans l'état de verrouillage de l'unité de verrouillage (260), un changement de la position angulaire prédéterminée réglée avec la deuxième unité de réglage de position angulaire (270) lors de la fixation de l'interface de fixation (202) à la machine-outil manuelle (100).

5. Ensemble d'outil selon la revendication 3 ou 4, **caractérisé en ce que** la deuxième unité de réglage de position angulaire (270) présente un élément de réglage d'angle (272) associé à l'interface de fixation (202), qui est relié rigidement au boîtier d'ensemble d'outil (210) .

6. Ensemble d'outil selon les revendications 3 à 5, **caractérisé en ce que** la deuxième unité de réglage de position angulaire (270) présente un élément de réglage d'angle (272) associé à l'interface de fixation (202), qui présente une denture de réglage d'angle (274).

7. Ensemble d'outil selon l'une quelconque des revendications 3 à 6, **caractérisé en ce que** la deuxième unité de réglage de position angulaire (270) présente un auxiliaire de centrage (276) pour le centrage axial de l'interface de fixation (202) sur la machine-outil manuelle (100).

8. Ensemble d'outil selon la revendication 7, **caractérisé en ce que** l'auxiliaire de centrage (276) est réalisé au moins en partie sous forme conique.

9. Ensemble d'outil selon l'une quelconque des revendications précédentes, **caractérisé en ce que** la première unité de réglage de position angulaire (300) présente une douille de centrage tubulaire (302), qui est entourée au moins en partie de façon coaxiale par un élément de réglage d'angle (272) associé à l'interface de fixation (202) avec création d'une zone de centrage, dans lequel un assemblage par emboîtement soumis à une force est formé entre la douille de centrage (302) et l'élément de réglage d'angle (272) dans chaque position angulaire réglable.

10. Ensemble d'outil selon la revendication 9, **caractérisé en ce que** l'assemblage par emboîtement peut être formé par un engagement d'une première denture de réglage d'angle (306) associée à la douille de centrage (302) dans une deuxième denture de réglage d'angle (308) associée à l'élément de réglage d'angle (272).

11. Ensemble d'outil selon la revendication 10, **caractérisé en ce que** la deuxième denture de réglage d'angle (308) est formée sur un épaulement périphérique orienté radialement vers l'intérieur (310) de l'élément de réglage d'angle (272) et est orientée à l'opposé de l'interface de fixation (202).

12. Ensemble d'outil selon l'une quelconque des revendications 9 à 11, **caractérisé en ce que** l'élément de réglage d'angle (272) est relié au boîtier d'ensemble d'outil (210) au moyen d'un organe de liaison de type douille (316).

13. Ensemble d'outil selon la revendication 12, **caractérisé en ce qu'**un ressort de pression (312) est disposé entre une bride orientée radialement vers l'intérieur (314) de l'organe de liaison (316) et un anneau de blocage (318) disposé sur l'élément de réglage d'angle (272).

14. Ensemble d'outil selon l'une quelconque des revendications précédentes, **caractérisé en ce que** la première unité de réglage de position angulaire (300) comprend une première denture de réglage d'angle (306) et une deuxième denture de réglage d'angle (308), dans lequel un assemblage par emboîtement soumis à une force est formé entre la première denture de réglage d'angle (306) et la deuxième denture de réglage d'angle (308) dans chaque position angulaire réglable.

15. Ensemble d'outil selon la revendication 14, **caractérisé en ce que** la première denture de réglage d'angle (306) est formée sur une douille de centrage (302), qui est associée à l'unité d'entraînement (204).

16. Ensemble d'outil selon la revendication 14 ou 15, **caractérisé en ce que** la deuxième denture de réglage d'angle (308) est disposée sur un corps de base (273) de l'ensemble d'outil (200).

17. Ensemble d'outil selon la revendication 16, **caractérisé en ce que** la denture de réglage d'angle (274) de la deuxième unité de réglage de position angulaire (270) est disposée sur le corps de base (273) .

18. Ensemble d'outil selon l'une quelconque des revendications précédentes, **caractérisé en ce que** l'unité de verrouillage (260) présente un corps de verrouillage (262) au moins partiellement de forme tubulaire ainsi qu'une bague d'actionnement (264) disposée sur le corps de verrouillage (262), qui peut être actionnée pour le verrouillage du corps de verrouillage (262) sur la machine-outil manuelle (100).

19. Ensemble d'outil selon la revendication 18, **caractérisé en ce que** le corps de verrouillage (262) présente au moins deux éléments de verrouillage (266, 268), qui sont formés à la manière de baïonnettes pour la réalisation d'un assemblage à baïonnette.

20. Système d'outil avec une machine-outil manuelle (100) et un ensemble d'outil (200, 400) selon l'une quelconque des revendications précédentes.
